# EUROPEAN PATENT APPLICATION

(11) **EP 4 832 321 A1**
(43) Date of publication of application: **28.10.2026**
(21) Application number: 25172230.2
(22) Date of filing: 24.04.2025
(51) Int. Cl.: H02K 49/02, H02K 49/04, H02K 7/104, B60K 7/00, B60L 7/28, H02K 7/102, H02K 5/20, H02K 17/32, H02K 16/02, H02K 17/16

(54) **COMBINED ELECTRICAL MACHINE AND BRAKING ARRANGEMENT WITH DUAL ROTORS AND WHEEL UNIT**

(71) Applicant: Volvo Truck Corporation, 405 08 Göteborg (SE)
(72) Inventor: ZACHRISSON, Jan, 439 94 ONSALA (SE); HILTUNEN, Larry, 423 36 TORSLANDA (SE); LAINE, Leo, 414 84 GÖTEBORG (SE); STENBRATT, Ulf, 434 94 VALLDA (SE); SJÖHOLM, Martin, 352 50 VÄXJÖ (SE); AUGUSTSSON, Kent, 517 37 BOLLEBYGD (SE); STRANDBERG, Jonny, 635 09 ESKILSTUNA (SE); LUNDIN, Joakim, 644 31 TORSHÄLLA (SE)
(74) Representative: Kransell & Wennborg KB

(57) **Abstract**

A combined electrical machine and braking arrangement (19) for use in a heavy-duty vehicle (3), the combined electric machine and braking arrangement comprising: a stator (21) configured to be coupled to a body of the vehicle (3), the stator (21) comprising stator windings; a first rotor (23) arranged concentrically outside the stator (21) and configured to be coupled to a wheel of the vehicle (3), the first rotor (23) being configured to provide propulsion torque to the wheel; and a second rotor (25) arranged concentrically inside the stator (21) and configured to be coupled to the wheel of the vehicle (3), the second rotor (25) being configured to provide braking torque to the wheel by dissipation of induced current in a resistive medium.

## Description

### TECHNICAL FIELD

The disclosure relates generally to a combined electrical machine and braking arrangement. In particular aspects, the disclosure relates to a combined electrical machine and braking arrangement with dual rotors, and to a wheel unit comprising such a combined electrical machine and braking arrangement. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Electrical commercial vehicles tend to use primarily regenerative braking instead of friction brakes to minimize energy consumption and thus maximize driving range. There are however situations where this is not possible due to limitations in the energy storage system (battery) due to high state-of-charge (SOC), high/low temperatures or other reasons.

One solution is to use the friction brakes. This however comes with other challenges, such as particle emissions, cost/downtime for maintenance, sizing of the friction brakes for this edge case, and additional noise.

It would be desirable to provide for reduced use of friction brakes.

### SUMMARY

According to a first aspect of the disclosure, there is provided a combined electrical machine and braking arrangement for use in a heavy-duty vehicle, the combined electric machine and braking arrangement comprising: a stator configured to be coupled to a body of the vehicle, the stator comprising stator windings; a first rotor arranged concentrically outside the stator and configured to be coupled to a wheel of the vehicle, the first rotor being configured to provide propulsion torque to the wheel; and a second rotor arranged concentrically inside the stator and configured to be coupled to the wheel of the vehicle, the second rotor being configured to provide braking torque to the wheel by dissipation of induced current in a resistive medium. The first aspect of the disclosure may seek to provide an electrical machine that can be used both for propulsion and for braking, even at times when regenerative braking is not possible. The present inventors have realized that a dual-rotor configuration, in which the first rotor provides efficient traction and regenerative braking while the second rotor is dedicated to braking via dissipation of electrical energy in a resistive load, enables robust and efficient braking even when regenerative braking is limited due to battery state-of-charge, temperature, or other constraints. Hereby, more efficient electromagnetic braking can be achieved in a vehicle provided with the combined electrical machine and braking arrangement, which in turn allows for reduced use of a friction brake, providing for reduced maintenance costs and reduced particulate emissions. Hereby, the vehicle may be equipped with a more compact friction brake system, or even completely without a friction brake system, enabling potential weight and cost savings. The inventors have further understood that by arranging the second rotor concentrically inside the stator, a compact and integrated structure may be achieved in which the braking rotor can be efficiently cooled and mechanically coupled to the wheel via a common interface with the traction rotor.

Optionally in some examples, including in at least one preferred example, the second rotor and the stator may be configured to form an eddy current brake, such that braking torque is generated by eddy currents induced in a conductive structure of the second rotor. This configuration may provide the technical benefit of enabling contactless braking through electromagnetic induction, without requiring discrete resistive components or mechanical wear surfaces. In particular, the braking torque may be produced by circulating currents within the material of conductive structure of the second rotor, where electrical energy is dissipated as heat due to the inherent resistance of the conductive structure. The conductive structure may, for example, comprise a solid steel disc, a copper or aluminum backplate, or another non-laminated conductive mass configured to interact with the magnetic field produced by the stator, such as an iron core.

Optionally in some examples, including in at least one preferred example, the second rotor may comprise rotor conductors configurable in at least a first rotor conductor configuration of the second rotor in which induced current flowing through the rotor conductors of the second rotor experiences a total resistance higher than a predefined total resistance. This configuration may provide the technical benefit of allowing the second rotor to operate efficiently as a braking rotor. In particular, this may allow a strong braking torque to be achieved even at low rotational speeds.

Optionally in some examples, including in at least one preferred example, the second rotor may be a squirrel cage rotor, and the first rotor conductor configuration of the second rotor may include a plurality of conducting bars, each extending between a first end ring and a second end ring. This configuration may provide the technical benefit of enabling a mechanically simple and robust implementation of the braking rotor. In particular, the use of conducting bars extending between end rings allows the second rotor to be manufactured using established squirrel cage rotor manufacturing techniques, while still providing the desired electrical characteristics for braking.

Optionally in some examples, including in at least one preferred example, each conducting bar in the plurality of conducting bars may be made of a material exhibiting a resistivity of at least 6 × 10⁻⁸ Ωm. This configuration may provide the technical benefit of enabling the total resistance experienced by induced current in the first rotor conductor configuration of the second rotor to be higher than the predefined total resistance. In particular, this may allow a total resistance sufficient for efficient braking operation to be achieved by material selection alone.

Optionally in some examples, including in at least one preferred example, each conducting bar in the plurality of conducting bars may be made of iron, steel, stainless steel, constantan, manganin, titanium, nichrome, or kanthal. This configuration may provide the technical benefit of enabling the use of materials with suitable resistivity for achieving the desired total resistance in the second rotor, while also allowing additional performance characteristics to be addressed through material selection. In particular, constantan and manganin may provide a relatively stable braking performance due to their low temperature coefficient of resistivity, while nichrome and kanthal may allow for high thermal robustness due to their ability to withstand operating temperatures up to approximately 1500°C.

Optionally in some examples, including in at least one preferred example, the first rotor conductor configuration of the second rotor may comprise a plurality of rotor conductors and a plurality of resistive elements connected to the plurality of rotor conductors in such a way that the induced current passes through the plurality of rotor conductors and the plurality of resistive elements, thereby providing the total resistance higher than the predefined total resistance. This configuration may provide the technical benefit of enabling efficient braking by adding electrical resistance externally to the rotor conductors. In particular, this may allow the desired resistance for braking to be achieved without relying solely on material selection for the rotor conductors.

Optionally in some examples, including in at least one preferred example, each rotor conductor in the plurality of rotor conductors of the second rotor may be made of a material exhibiting a resistivity less than 4 × 10⁻⁸ Ωm. This configuration may provide the technical benefit of allowing the resistivity of the rotor conductors to remain relatively low, such that the total resistance in the first rotor conductor configuration of the second rotor is primarily determined by the connected resistive elements. In particular, this may facilitate precise tuning of the braking resistance by enabling separation between conductor properties and added resistance.

Optionally in some examples, including in at least one preferred example, each rotor conductor in the plurality of rotor conductors of the second rotor may be made of copper.

Optionally in some examples, including in at least one preferred example, the rotor conductors of the second rotor may be configurable in a second rotor conductor configuration of the second rotor in which induced current flowing through the rotor conductors of the second rotor experiences a total resistance lower than the predefined total resistance, and the combined electrical machine and braking arrangement may comprise a configuration switching arrangement controllable to switch between the first rotor conductor configuration of the second rotor and the second rotor conductor configuration of the second rotor. This configuration may provide the technical benefit of enabling the second rotor to participate in traction or regenerative braking by adopting a low-resistance configuration. In particular, this may increase the usefulness of the combined electrical machine and braking arrangement by allowing both rotors to be used together to deliver or recover torque during propulsion or regenerative braking phases.

Optionally in some examples, including in at least one preferred example, the first rotor may comprise rotor conductors configurable in at least a first rotor conductor configuration of the first rotor in which induced current flowing through the rotor conductor configuration of the first rotor experiences a total resistance lower than the predefined total resistance. This configuration may provide the technical benefit of enabling the electrical machine formed by the stator and the first rotor to operate as an induction-type machine optimized for motoring and regenerative braking. In particular, maintaining a low total resistance may support efficient energy conversion during both propulsion and regenerative operation.

Optionally, in some examples, the first rotor may alternatively include permanent magnets or be of the externally excited type. This may allow the electrical machine formed by the stator and the first rotor to be implemented using other machine topologies depending on design preferences or system-level constraints.

Optionally in some examples, including in at least one preferred example, each rotor conductor in the plurality of rotor conductors of the first rotor may be made of a material exhibiting a resistivity less than 4 × 10⁻⁸ Ωm. This configuration may provide the technical benefit of minimizing resistive losses in the first rotor during motoring and regenerative braking. In particular, the low resistivity may contribute to high efficiency and thermal stability in the electrical machine formed by the stator and the first rotor. The rotor conductors may, for example, be made of copper.

Optionally in some examples, including in at least one preferred example, the predefined total resistance may be around 1000 Ω. This configuration may provide the technical benefit of enabling the braking performance of the combined electrical machine and braking arrangement to be tuned by defining a threshold resistance level that separates a braking mode from other operating modes. In particular, the predefined total resistance may serve as a design parameter for configuring the rotor conductor materials, geometries, and resistive elements to achieve desired braking characteristics across relevant speed and load conditions.

Optionally in some examples, including in at least one preferred example, the combined electrical machine and braking arrangement may be included in a wheel unit, further comprising a rim configured for mounting of a tire, the first rotor and the second rotor of the combined electrical machine and braking arrangement being coupled to the rim to rotate together with the rim. This configuration may provide the technical benefit of allowing both traction and braking functions to be integrated within the wheel unit. In particular, coupling both rotors to the rim may enable direct transfer of motoring and braking torque to the wheel, while maintaining a compact structure suitable for installation at the wheel end of a heavy-duty vehicle.

Optionally in some examples, including in at least one preferred example, the wheel unit may further comprise a cooling member thermally coupled to the second rotor and configured to remove heat generated during braking. This configuration may provide the technical benefit of effectively managing the substantial heat produced by the second rotor during braking operations. In particular, the arrangement of the combined electrical machine and braking arrangement within the wheel unit may allow ample space for the cooling member, enabling it to be dimensioned appropriately for the removal of significant thermal energy. Although air cooling could be possible, liquid cooling may offer higher efficiency and capacity for heat dissipation. The cooling member may include a cooling channel coupled to a heat exchanger arranged at a suitable location in the vehicle, such that heat can be transferred away from the wheel unit using a circulating cooling liquid.

Optionally in some examples, including in at least one preferred example, the wheel unit may further comprise a friction brake assembly arranged radially inside the second rotor of the combined electrical machine and braking arrangement, the friction brake assembly including a first friction brake member coupled to the rim to rotate together with the rim, and a non-rotating second friction brake member controllable to interact with the first friction brake member. This configuration may provide the technical benefit of allowing a friction brake to be integrated in a radially inner position relative to the braking rotor, thereby utilizing available space within the wheel unit while enabling mechanical braking functionality when needed.

Optionally in some examples, including in at least one preferred example, the wheel unit may comprise a friction brake housing and stator assembly enclosing the friction brake assembly, the friction brake housing and stator assembly including the cooling member. This configuration may provide the technical benefit of enabling thermal management of both the friction brake and the second rotor using a shared cooling structure. In particular, integrating the cooling member into the friction brake housing and stator assembly may allow efficient use of structural components and reduce the overall complexity of the wheel unit design.

Optionally in some examples, including in at least one preferred example, the wheel unit may further comprise a steering knuckle, wherein the stator of the combined electrical machine and braking arrangement may be configured for non-rotating mechanical coupling to a corresponding interface structure of the steering knuckle. This configuration may provide the technical benefit of allowing the wheel unit to be mounted at a steerable position of the vehicle. In particular, the interface between the stator and the steering knuckle may enable stable support of the non-rotating parts of the wheel unit while allowing the rotatable components to deliver torque and braking forces to the wheel.

Optionally in some examples, including in at least one preferred example, the wheel unit according to examples of the disclosure may be comprised in a vehicle. This configuration may provide the technical benefit of enabling the vehicle to utilize a compact and integrated wheel-end arrangement that provides both traction and braking functionality. In particular, this may support vehicle architectures in which propulsion and braking are implemented locally at each wheel position.

Optionally in some examples, including in at least one preferred example, the wheel unit may be arranged at a front position of the vehicle and may be configured to be steerable. This configuration may provide the technical benefit of enabling the front wheels of the vehicle to contribute to both propulsion and braking while also supporting steering functionality. In particular, this may allow the advantages of the combined electrical machine and braking arrangement to be realized at steerable positions of the vehicle.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is a cross-section view of an exemplary wheel unit according to an example.
**FIG. 3A** is an exemplary second rotor of the combined electrical machine and braking arrangement comprised in the exemplary wheel unit in FIG. 2 in a first configuration.
**FIG. 3B** is an exemplary second rotor of the combined electrical machine and braking arrangement comprised in the exemplary wheel unit in FIG. 2 in a second configuration.
**FIG. 4A** is an exemplary second rotor of the combined electrical machine and braking arrangement comprised in the exemplary wheel unit in FIG. 2 in a first configuration.
**FIG. 4B** is an exemplary second rotor of the combined electrical machine and braking arrangement comprised in the exemplary wheel unit in FIG. 2 in a second configuration.

### DETAILED DESCRIPTION

The detailed description set forth below provides information and examples of the disclosed technology with sufficient detail to enable those skilled in the art to practice the disclosure.

The present disclosure relates to a combined electrical machine and braking arrangement for a vehicle, in which a stator is concentrically arranged between a first rotor and a second rotor. The first rotor is configured to provide traction and regenerative braking. The second rotor is configured to provide braking by passing induced current through a resistive load. The stator is shared between the two rotors, such that the second rotor can be arranged radially inside the stator and provide braking using limited additional radial space. This configuration allows the braking functionality of the second rotor to be integrated without affecting the design or packaging of the first rotor, which may be optimized for propulsion and regenerative braking. The combined electrical machine and braking arrangement may be comprised in a wheel unit, in which both the first rotor and the second rotor are coupled to a rim to rotate together with a wheel. The stator may be configured for non-rotating mechanical coupling to a steering knuckle or another fixed vehicle structure. The wheel unit may further comprise a friction brake assembly and a cooling member arranged radially inside the second rotor.

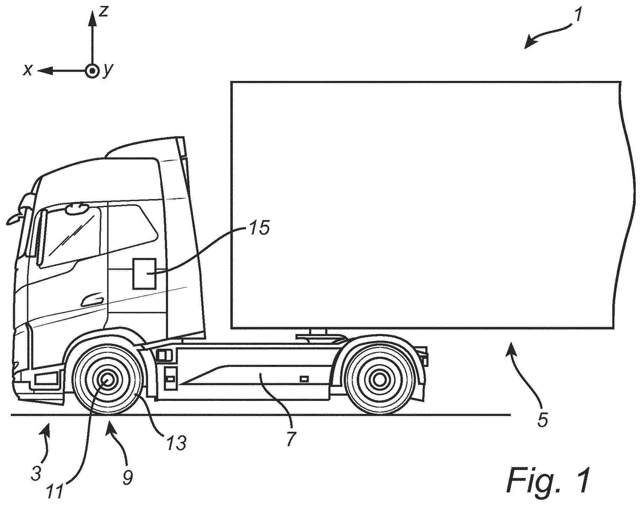

FIG. 1 illustrates an exemplary vehicle 1 according to an example. Referring to FIG. 1, the vehicle 1 comprises a first vehicle member 3 and a second vehicle member 5 coupled to the first vehicle member 3. In this example, the first vehicle member 3 is a battery electric vehicle (BEV) tractor, and the second vehicle member 5 is a semitrailer. However, the present disclosure is not limited to this configuration, and may also apply to vehicles comprising a single vehicle member or to vehicles powered by other means, such as an internal combustion engine or a fuel cell.

Referring again to FIG. 1, the BEV tractor 3 includes a battery pack 7 and a plurality of wheel units 9, one of which is indicated by a reference numeral in FIG. 1. Each wheel unit 9 is arranged to rotate around a respective rotational axis 11 and includes a tire 13 mounted on a rim. In this example, at least one of the wheel units 9 is located at a front position of the vehicle 1 and is configured to be steerable. The BEV tractor 3 also comprises a computer system 15, which may be configured to monitor or control one or more functions of the vehicle, including those associated with the wheel units 9.

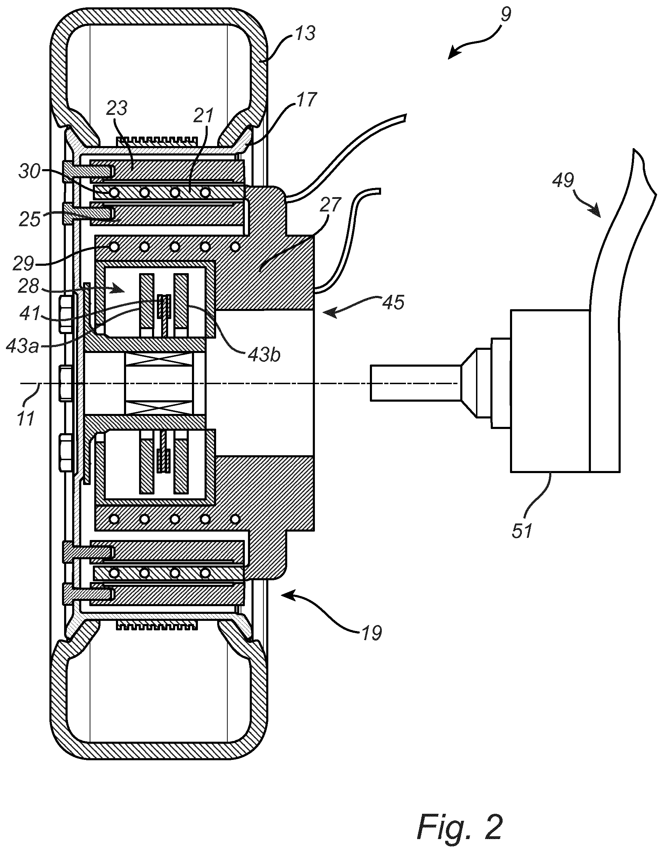

FIG. 2 is a cross-section view of an exemplary wheel unit 9 according to an example. The wheel unit 9 comprises a rim 17 configured for mounting of a tire 13. The wheel unit 9 further comprises a combined electrical machine and braking arrangement 19 arranged concentrically inside the rim 17. The combined electrical machine and braking arrangement 19 includes a stator 21, a first rotor 23, and a second rotor 25. The stator 21 comprises stator windings and is configured to be coupled to a body of the vehicle. The first rotor 23 is arranged concentrically outside the stator 21 and is configured to provide traction and regenerative braking. The second rotor 25 is arranged concentrically inside the stator 21 and is configured to provide braking by passing induced current through a resistive load. The first rotor 23 and the second rotor 25 are coupled to the rim 17 to rotate together with the rim 17.

The configuration shown in FIG. 2, with a large-diameter first rotor 23 arranged radially outside the stator 21, allows the combined electrical machine and braking arrangement 19 to deliver sufficient torque to, at least, maintain cruising of a heavy-duty vehicle 3 without the need for additional gearing. The elimination of gearing reduces mechanical complexity and frees up space within the wheel unit 9.

The wheel unit 9 may comprise an optional friction brake assembly 28 arranged radially inside the second rotor 25. The friction brake assembly 28 includes a first friction brake member 41 coupled to the rim 17 to rotate together with the rim 17, and a non-rotating second friction brake member 43a, 43b configured to interact with the first friction brake member 41. The second friction brake member 43a, 43b may be controllable to apply a braking force to the first friction brake member 41, for example in response to a driver brake command or an automatic braking signal.

The wheel unit 9 may comprise an optional cooling member 27 arranged radially inside the second rotor 25. The cooling member 27 includes a cooling channel 29 for circulation of cooling liquid for cooling of the combined electrical machine and braking arrangement 19. The cooling channel 29 may be configured to be coupled to a heat exchanger located elsewhere in the vehicle, allowing thermal energy to be transferred away from the wheel unit 9 using a circulating liquid coolant.

The cooling channel 29 may be formed using different manufacturing techniques. In some examples, grooves or bores may be machined into mating surfaces of the surrounding structure, such that the channel is enclosed when the parts are assembled. In other examples, the channel may be cast into a component using core inserts to define its internal geometry. Additive manufacturing may also be used to form a conformal or thermally optimized flow path, allowing the coolant to follow the thermal load distribution within the assembly.

The cooling member 27 may be formed as an integrated or modular structure and may be manufactured, for example, by casting, machining, or assembling layered components. The cooling channel 29 may be formed as an internal passage in the cooling member 27, for example by enclosing a groove or channel with a cover or by embedding tubing into the structure. The cooling channel 29 may extend around the rotational axis of the wheel unit 9 and may include one or more inlet and outlet ports for connection to a coolant circuit of the vehicle. In use, a cooling liquid may be circulated through the cooling channel 29 to remove heat from components in thermal contact with the cooling member 27.

In the example illustrated in FIG. 2, the wheel unit 9 may comprise a friction brake housing and stator assembly 45 enclosing the friction brake assembly 28. The friction brake housing and stator assembly 45 includes the stator 21 and the cooling member 27. The cooling member 27 may be attached to the stator 21 in such a way that cooling liquid is guided by the cooling member 27 into the stator 21, allowing circulation through a cooling channel 30 formed in the stator 21. This configuration may provide efficient cooling of the stator 21 and may also enable the second rotor 25 to be cooled from both the radially inner and radially outer sides, improving the ability to remove heat generated during braking.

The example shown in FIG. 2 includes a steering knuckle 49, which supports the wheel unit 9 at a steerable position of the vehicle. The friction brake housing and stator assembly 45 includes an interface structure configured for non-rotating mechanical coupling to a corresponding interface structure 51 of the steering knuckle 49. This configuration allows the stator 21 to remain fixed relative to the vehicle chassis, while the rim 17, first rotor 23, and second rotor 25 rotate around it. By integrating the interface structure into the friction brake housing and stator assembly 45, the mounting arrangement may be simplified and the number of separate support structures reduced. In addition, the connection to the steering knuckle 49 may allow for routing of cooling lines, sensors, or control signals through the fixed part of the wheel unit, facilitating integration with the vehicle systems.

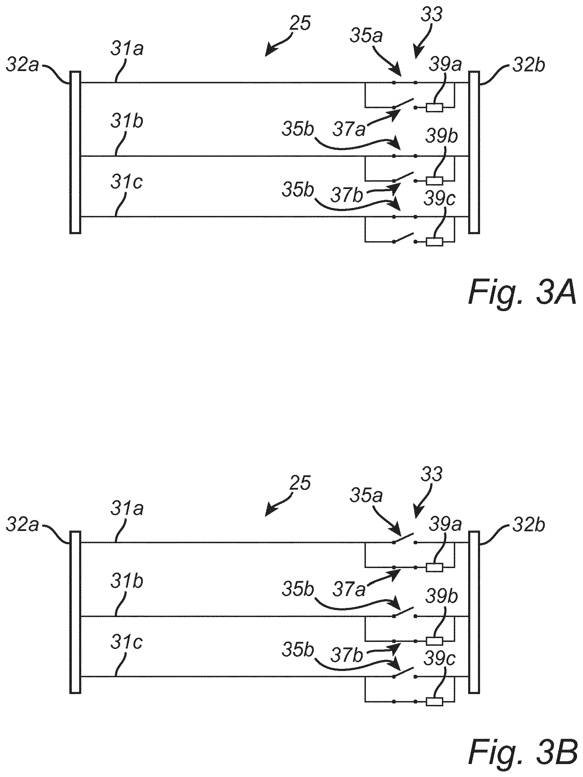

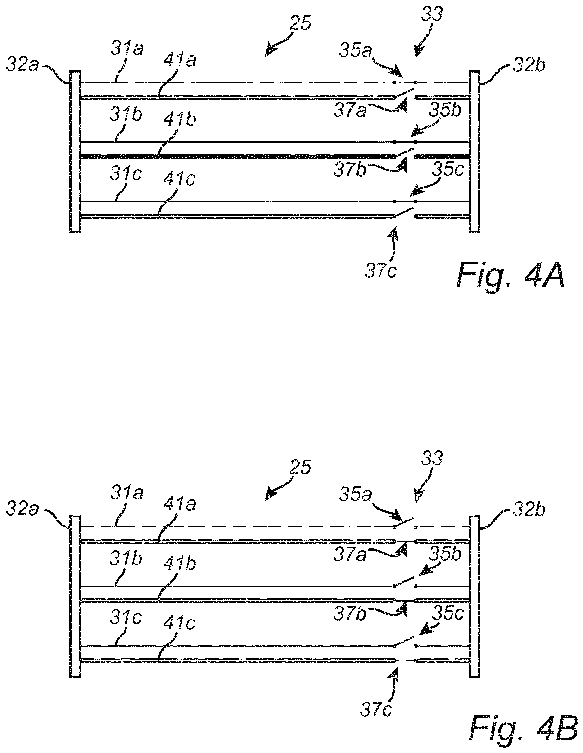

Examples of the combined electrical machine and braking arrangement 19 will now be described in further detail with additional reference to FIGS. 3A-3B and FIGS. 4A-4B. These figures illustrate different examples of how the second rotor 25 may be configured to provide braking by passing induced current through a resistive load. The first rotor 23 will not be discussed in detail, but it will be straightforward for the skilled person to configure the first rotor 23 based on the intended traction and regenerative braking requirements. As described in the summary section, the first rotor 23 may, for example, be implemented as a squirrel cage rotor having a low total resistance, or may alternatively include permanent magnets or be of the externally excited type.

As described above, the second rotor 25 is configured to provide braking by passing induced current through a resistive load. In some examples, the second rotor 25 may comprise rotor conductors configurable in at least a first rotor conductor configuration in which induced current flowing through the rotor conductors experiences a total resistance higher than a predefined total resistance. This configuration may allow the braking rotor to operate efficiently, as the predefined total resistance may be selected to provide a braking torque suitable for use across a relevant vehicle speed range, including low rotational speeds.

The first rotor conductor configuration may be realized in different ways, depending on the electrical and mechanical design of the rotor. The rotor conductors may, for example, be made of a material having relatively high resistivity, or be arranged such that the current path includes one or more resistive components.

In some examples, the rotor conductors of the second rotor 25 may be configurable in a second rotor conductor configuration in which induced current experiences a total resistance lower than the predefined total resistance. The combined electrical machine and braking arrangement 19 may comprise a configuration switching arrangement controllable to switch between the first rotor conductor configuration and the second rotor conductor configuration. This may allow the second rotor 25 to be used selectively for braking or to remain inactive during propulsion, or to operate in combination with the first rotor 23 when additional torque or regenerative braking capacity is required.

FIGS. 3A and 3B illustrate an example of the second rotor 25 in a first and a second configuration, respectively. In this example, the second rotor 25 is implemented as a squirrel cage rotor comprising a set of conducting bars 31a-c extending between a first end ring 32a and a second end ring 32b. Each conducting bar 31a-c is made of a material with relatively low resistivity, such as copper or aluminum. A resistive element 39a-c is arranged in parallel with each conducting bar 3 1a-c, and a configuration switching arrangement 33 comprises a first set of switches 35a-c and a second set of switches 37a-c. In the first configuration, shown in FIG. 3A, the first set of switches 35a-c is controlled to be conducting while the second set 37a-c is non-conducting, such that each resistive element 39a-c is bypassed. This allows induced current to flow primarily through the low-resistance conducting bars 31a-c, resulting in a total rotor resistance suitable for propulsion or regenerative braking. In the second configuration, shown in FIG. 3B, the first set of switches 35a-c is non-conducting and the second set 37a-c is conducting, causing the induced current to pass through the resistive elements 39a-c instead. This increases the total rotor resistance, enabling effective braking through dissipation of electrical energy.

FIGS. 4A and 4B illustrate another example of the second rotor 25 in a first and a second rotor conductor configuration, respectively. The second rotor 25 is of the squirrel cage type and includes a first set of rotor conductors 31a-c and a second set of rotor conductors 41a-c, each extending between a first end ring 32a and a second end ring 32b. Each rotor conductor in the first set 31a-c is made of a material with relatively low electrical resistance, such as copper or aluminum, while each rotor conductor in the second set 41a-c is made of a material with higher electrical resistance, such as iron or steel. A configuration switching arrangement 33 comprises a first set of switches 35a-c and a second set of switches 37a-c. In the first rotor conductor configuration, shown in FIG. 4A, the first set of switches 35a-c is non-conducting and the second set of switches 37a-c is conducting, such that the induced current flows through the higher-resistance rotor conductors 41a-c. In the second rotor conductor configuration, shown in FIG. 4B, the first set of switches 35a-c is conducting and the second set of switches 37a-c is non-conducting, such that the induced current flows through the low-resistance rotor conductors 31a-c. The first rotor conductor configuration may provide a total resistance higher than a predefined total resistance and may be used for braking, while the second rotor conductor configuration may be used during propulsion or regenerative braking.

Although the second rotor 25 has been described above in the form of a squirrel cage rotor comprising conducting bars, it may alternatively be realized using rotor windings connected to slip rings. In such an example, the rotor windings may be made of a material with relatively low electrical resistance, such as copper or aluminum, and the slip rings may enable electrical connection to external circuitry while allowing the rotor windings to rotate with the rotor 25. A configuration switching arrangement may be arranged outside the rotor and connected to the slip rings by means of sliding contacts. The switching arrangement may include resistive elements and switches configured to selectively direct the induced current through one or more resistive elements to achieve a total resistance higher than a predefined threshold. This type of implementation may provide increased flexibility in the selection of rotor resistance values and allow precise control of braking behavior.

As an alternative to the examples described above, the second rotor may be configured as the rotor of an eddy current brake. In such examples, braking torque may be generated by eddy currents induced in a conductive structure of the second rotor as it rotates relative to the magnetic field produced by the stator. The conductive structure may, for example, be implemented using a solid steel, copper, or aluminum component arranged to interact with the stator field. It will be readily understood by a person skilled in the art that any known eddy current brake configuration may be adapted for use as the second rotor in the combined electrical machine and braking arrangement, and that such an implementation may be realized without requiring modification of the overall structural layout described in the present disclosure.

Example 1: A combined electrical machine and braking arrangement 19 for use in a heavy-duty vehicle 3, the combined electric machine and braking arrangement comprising: a stator 21 configured to be coupled to a body of the vehicle 3, the stator 21 comprising stator windings; a first rotor 23 arranged concentrically outside the stator 21 and configured to be coupled to a wheel of the vehicle 3, the first rotor 23 being configured to provide propulsion torque to the wheel; and a second rotor 25 arranged concentrically inside the stator 21 and configured to be coupled to the wheel of the vehicle 3, the second rotor 25 being configured to provide braking torque to the wheel by dissipation of induced current in a resistive medium.

Example 2: The combined electrical machine and braking arrangement 19 of example 1, wherein the second rotor 25 and the stator 21 are configured to form an eddy current brake, such that braking torque is generated by eddy currents induced in a conductive structure of the second rotor 25.

Example 3: The combined electrical machine and braking arrangement 19 of example 1 or 2, wherein the second rotor 25 comprises rotor conductors 31a c configurable in at least a first rotor conductor configuration of the second rotor 25 in which induced current flowing through the rotor conductors 31a c of the second rotor experiences a total resistance higher than a predefined total resistance.

Example 4: The combined electrical machine and braking arrangement 19 of example 3, wherein: the second rotor 25 is a squirrel cage rotor; and the first rotor configuration of the second rotor 25 includes a plurality of conducting bars 41a c, each extending between a first end ring 32a and a second end ring 32b.

Example 5: The combined electrical machine and braking arrangement 19 of example 4, wherein each conducting bar 41a c in the plurality of conducting bars is made of a material exhibiting a resistivity of at least 6 x 10⁻⁸ Ωm.

Example 6: The combined electrical machine and braking arrangement 19 of example 4 or 5, wherein each conducting bar 41a c in the plurality of conducting bars is made of iron, steel, stainless steel, constantan, manganin, titanium, nichrome, or kanthal.

Example 7: The combined electrical machine and braking arrangement 19 of example 3, wherein the first rotor conductor configuration of the second rotor 25 comprises: a plurality of rotor conductors 31a c; and a plurality of resistive elements 39a-c connected to the plurality of rotor conductors 31a c in such a way that the induced current passes through the plurality of rotor conductors 31a c and the plurality of resistive elements 39a-c, thereby providing the total resistance higher than the predefined total resistance.

Example 8: The combined electrical machine and braking arrangement 19 of example 6, wherein each rotor conductor 31a c in the plurality of rotor conductors of the second rotor 25 is made of a material exhibiting a resistivity less than 4 x 10⁻⁸ Ωm.

Example 9: The combined electrical machine and braking arrangement 19 of example 7 or 8, wherein each rotor conductor 31a c in the plurality of rotor conductors of the second rotor 25 is made of copper.

Example 10: The combined electrical machine and braking arrangement 19 of any of examples 3-9, wherein: the rotor conductors 31a c of the second rotor 25 are configurable in a second rotor conductor configuration of the second rotor 25 in which induced current flowing through the rotor conductors 31a c of the second rotor experiences a total resistance lower than the predefined total resistance; and the combined electrical machine and braking arrangement 19 comprises a configuration switching arrangement 33 controllable to switch between the first rotor conductor configuration of the second rotor 25 and the second rotor conductor configuration of the second rotor 25.

Example 11: The combined electrical machine and braking arrangement 19 of any of examples 1-9, wherein the first rotor 23 comprises rotor conductors configurable in at least a first rotor conductor configuration of the first rotor in which induced current flowing through the rotor conductor configuration of the first rotor 23 experiences a total resistance, lower than a predefined total resistance.

Example 12: The combined electrical machine and braking arrangement 19 of example 11, wherein each rotor conductor in the plurality of rotor conductors of the first rotor 23 is made of a material exhibiting a resistivity less than 4 x 10⁻⁸ Ωm.

Example 13: The combined electrical machine and braking arrangement 19 of example 11 or 12, wherein each rotor conductor in the plurality of rotor conductors of the first rotor 23 is made of copper.

Example 14: The combined electrical machine and braking arrangement 19 of any of examples 2-13, wherein the predefined total resistance is 1000 Ω.

Example 15: A wheel unit 9 for a heavy-duty vehicle 3, comprising: a rim 17 configured for mounting of a tire 13; and the combined electrical machine and braking arrangement 19 of any of examples 1-14 arranged concentrically inside the rim 17, the first rotor 23 and the second rotor 25 of the combined electrical machine and braking arrangement 19 being coupled to the rim 17 to rotate together with the rim 17.

Example 16: The wheel unit 9 of example 15, wherein the wheel unit 9 comprises: a cooling member 27 arranged radially inside the second rotor 25 of the combined electrical machine and braking arrangement 19, the cooling member 27 including a cooling channel 29 for circulation of cooling liquid for cooling of the combined electrical machine and braking arrangement 19.

Example 17: The wheel unit 9 of example 15 or 16, wherein the wheel unit 9 comprises: a friction brake assembly 31 arranged radially inside the second rotor 25 of the combined electrical machine and braking arrangement 19, the friction brake assembly 31 including a first friction brake member 41 coupled to the rim 17 to rotate together with the rim 17, and a non-rotating second friction brake member 43a b controllable to interact with the first friction brake member 41.

Example 18: The wheel unit 9 of example 17, wherein: the wheel unit 9 comprises a friction brake housing and stator assembly 45 enclosing the friction brake assembly 31; and the friction brake housing and stator assembly 45 includes the cooling member 27.

Example 19: The wheel unit 9 of any of examples 15-18, further comprising a steering knuckle 49, wherein the stator 21 of the combined electrical machine and braking arrangement 19 is configured for non-rotating mechanical coupling to a corresponding interface structure 51 of the steering knuckle 49.

Example 20: A vehicle 3 comprising a wheel unit 9 of any of examples 15-18.

Example 21: The vehicle 3 of example 20, wherein the wheel unit 9 is arranged at a front position of the vehicle 3 and is configured to be steerable.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A combined electrical machine and braking arrangement (19) for use in a heavy-duty vehicle (3), the combined electric machine and braking arrangement comprising:
a stator (21) configured to be coupled to a body of the vehicle (3), the stator (21) comprising stator windings;
a first rotor (23) arranged concentrically outside the stator (21) and configured to be coupled to a wheel of the vehicle (3), the first rotor (23) being configured to provide propulsion torque to the wheel; and
a second rotor (25) arranged concentrically inside the stator (21) and configured to be coupled to the wheel of the vehicle (3), the second rotor (25) being configured to provide braking torque to the wheel by dissipation of induced current in a resistive medium.

2. The combined electrical machine and braking arrangement (19) of claim 1, wherein the second rotor (25) and the stator (21) are configured to form an eddy current brake, such that braking torque is generated by eddy currents induced in a conductive structure of the second rotor (25).

3. The combined electrical machine and braking arrangement (19), of claim 1 or 2, wherein the second rotor (25) comprises rotor conductors (31a-c) configurable in at least a first rotor conductor configuration of the second rotor (25) in which induced current flowing through the rotor conductors (31a-c) of the second rotor experiences a total resistance higher than a predefined total resistance.

4. The combined electrical machine and braking arrangement (19) of claim 3, wherein:
the second rotor (25) is a squirrel cage rotor; and
the first rotor configuration of the second rotor (25) includes a plurality of conducting bars (41a-c), each extending between a first end ring (32a) and a second end ring (32b).

5. The combined electrical machine and braking arrangement (19) of claim 4, wherein each conducting bar (41a-c) in the plurality of conducting bars is made of a material exhibiting a resistivity of at least 6 x 10⁻⁸ Ωm.

6. The combined electrical machine and braking arrangement (19) of claim 3, wherein the first rotor conductor configuration of the second rotor (25) comprises:
a plurality of rotor conductors (31a-c); and
a plurality of resistive elements (39a-c) connected to the plurality of rotor conductors (31a-c) in such a way that the induced current passes through the plurality of rotor conductors (31a-c) and the plurality of resistive elements (39a-c), thereby providing the total resistance higher than the predefined total resistance.

7. The combined electrical machine and braking arrangement (19) of claim 6, wherein each rotor conductor (31a-c) in the plurality of rotor conductors of the second rotor (25) is made of a material exhibiting a resistivity less than 4 x 10⁻⁸ Ωm.

8. The combined electrical machine and braking arrangement (19) of any of claims 3-7, wherein:
the rotor conductors (31a-c) of the second rotor (25) are configurable in a second rotor conductor configuration of the second rotor (25) in which induced current flowing through the rotor conductors (31a-c) of the second rotor experiences a total resistance lower than the predefined total resistance; and
the combined electrical machine and braking arrangement (19) comprises a configuration switching arrangement (33) controllable to switch between the first rotor conductor configuration of the second rotor (25) and the second rotor conductor configuration of the second rotor (25).

9. The combined electrical machine and braking arrangement (19) of any of claims 1-8, wherein the first rotor (23) comprises rotor conductors configurable in at least a first rotor conductor configuration of the first rotor in which induced current flowing through the rotor conductor configuration of the first rotor (23) experiences a total resistance, lower than a predefined total resistance.

10. The combined electrical machine and braking arrangement (19) of any of claims 2-9, wherein the predefined total resistance is 1000 Ω.

11. A wheel unit (9) for a heavy-duty vehicle (3), comprising:
a rim (17) configured for mounting of a tire (13); and
the combined electrical machine and braking arrangement (19) of any of claims 1-10 arranged concentrically inside the rim (17), the first rotor (23) and the second rotor (25) of the combined electrical machine and braking arrangement (19) being coupled to the rim (17) to rotate together with the rim (17).

12. The wheel unit (9) of claim 11, wherein the wheel unit (9) comprises:
a cooling member (27) arranged radially inside the second rotor (25) of the combined electrical machine and braking arrangement (19), the cooling member (27) including a cooling channel (29) for circulation of cooling liquid for cooling of the combined electrical machine and braking arrangement (19).

13. The wheel unit (9) of claim 11 or 12, wherein the wheel unit (9) comprises:
a friction brake assembly (31) arranged radially inside the second rotor (25) of the combined electrical machine and braking arrangement (19), the friction brake assembly (31) including a first friction brake member (41) coupled to the rim (17) to rotate together with the rim (17), and a non-rotating second friction brake member (43a-b) controllable to interact with the first friction brake member (41).

14. The wheel unit (9) of claim 13, wherein:
the wheel unit (9) comprises a friction brake housing and stator assembly (45) enclosing the friction brake assembly (31); and
the friction brake housing and stator assembly (45) includes the cooling member (27).

15. A vehicle (3) comprising a wheel unit (9) of any of claims 11-14.
